# EUROPÄISCHE PATENTSCHRIFT

(11) **EP 2 698 649 B1**
(45) Veröffentlichungstag und Bekanntmachung des Hinweises auf die Patenterteilung: **08.07.2015**
(21) Anmeldenummer: 13004865.5
(22) Anmeldetag: 15.11.2010
(51) Int. Cl.: G01S 17/02, G01S 7/497, G01S 7/481, G08B 29/00, G08B 29/04

(54) **Überwachungssensor mit Selbstprüfung**
Self-testing monitoring sensor
Capteur de surveillance doté d'un contrôle automatique

(43) Veröffentlichungstag der Anmeldung: 19.02.2014
(62) Teilanmeldung aus: 10014620.8
(73) Patentinhaber: Cedes AG, 7302 Landquart (CH)
(72) Erfinder: De Col, Beat, 7320 Sargans (CH); Leutenegger, Tobias, Dr., 7000 Chur (CH); Schatt, Michael, 8808 Pfäffikon (CH)
(74) Vertreter: Dobler, Markus

(56) Entgegenhaltungen:
- DE-A1-102008 032 216
- DE-B3-102007 025 373
- US-A- 4 990 895

## Beschreibung

Die vorliegende Erfindung betrifft einen Sensor für die Überwachung eines Überwachungsbereichs, insbesondere eines im öffnungsbereich einer Tür liegenden Raumbereichs.

### Stand der Technik:

Zur Erhöhung der Betriebssicherheit von automatisch zu öffnenden Türen und/oder Toren ist die Verwendung von handelsüblichen Überwachungssensoren bekannt, die bei Erfassung eines Objekts in einem durch die Bewegung der zu öffnenden Tür und/oder des zu öffnenden Tores liegenden Gefahrenbereich eine potentielle Gefahrensituation signalisieren. Die DE 10 2007 025 373 B3 offenbart eine visuelle Überwachungsvorrichtung mit Entfernungsbestimmung und Plausibilitätsprüfung anhand von Bildgrößen aus nacheinander aufgenommenen Bildern, sowie einen nicht näher beschriebenen Selbsttest für einen Bildsensor. Die DE 10 2008 032 216 A1 thematisiert eine Vorrichtung zur Erkennung der Anwesenheit eines Objekts in einem Raum, basierend auf einer rotierenden Laserscannvorrichtung. Die US 4,990,895 beschreibt ein Verfahren und eine Vorrichtung zum Test eines fotoelektrischen Schaltkreises.

### Aufgabe der Erfindung:

Der Erfindung liegt die Aufgabe zugrunde einen Sensor gemäß dem einleitend genannten Stand der Technik dahingehend zu verbessern, dass seine Funktionstüchtigkeit auch bei schlechter, insbesondere fehlender Objekterkennungssituation überprüfbar ist.

Die Lösung dieser Aufgabe erfolgt ausgehend vom Oberbegriff des Anspruchs 1 durch dessen kennzeichnende Merkmale. In den Unteransprüchen sind vorteilhafte und zweckmäßige Weiterbildungen angegeben.

Dementsprechend betrifft die vorliegende Erfindung einen Sensor für die Überwachung eines Überwachungsbereichs, insbesondere eines im Öffnungsbereich einer Tür, eines Tores oder eines Fensters liegenden Raumbereichs. Der Sensor umfasst eine Sendeeinrichtung, die eine Strahlung, insbesondere elektromagnetische Strahlung aussendet, und eine Empfangseinrichtung zur Erfassung von Strahlung, insbesondere reflektierter, von der Sendeeinrichtung ausgestrahlter Strahlung, wobei der Sensor in der Lage ist, mittels der erfassten Strahlung Objekte im Überwachungsbereich zu detektieren. Zusätzlich sind Mittel zur Durchführung einer Funktionsprüfung für wenigstens eine Sensorkomponente vorgesehen.

Der Sensor zeichnet sich dadurch aus, dass die Prüfmittel eine Auswerteanordnung umfassen, die dazu ausgelegt ist, ein Signal der Empfangseinrichtung, basierend auf einer Empfangstätigkeit beim Vorgang eines Sendebetriebs und/oder ein Signal der Sendeeinrichtung auf Plausibilität hin zu überprüfen.

Unter Plausibilität wird hierbei zum einen verstanden, dass geprüft wird, ob an der zu prüfenden Komponente überhaupt ein Signal in der Art detektiert werden kann, welches im entsprechenden Betriebszustand des Sensors zu erwarten ist. Zum anderen wird auch die Überprüfung, ob der Wert für ein ggf. detektiertes Signal in einem zu erwartenden Wertbereich liegt, als im Sinne der beanspruchten Plausibilitätsprüfung liegend verstanden.

Als zu überprüfendes Signal werden erfindungsgemäß sowohl Eingangssignale als auch Ausgangssignale der zu prüfenden Sensorkomponenten verstanden. Z. B. ein elektrisches Potenzial, dass zwischen zwei Schaltungspunkten entweder aufgrund einer Versorgung mit der betreffenden Betriebsspannung beaufschlagt werden müsste und/oder durch Erzeugung eines Potenzialunterschiedes zwischen zwei Schaltungspunkten, als Reaktion eines Sensorelementes auf eine Einwirkung auf dieses, wie z. B. der Beaufschlagung einer Strahlung auf ein fotoelektrisches Element und/oder auf ein Akustik erfassendes Element. Auch ein elektrischer Strom, der in einem bestimmten Schaltungsbereich fließt, z. B. durch einen Anschlusspunkt eines Sensorelementes oder dergleichen wird in diesem Sinne als Signal verstanden.

Als Signale werden auch, von der Sendeeinrichtung abgegebene Strahlung und/oder andere, von anderen Quellen als der des Sensors stammende Strahlung oder dergleichen Signale verstanden, die von einer Sensorkomponente aufgrund einer entsprechenden Ansteuerung, z. B, mit Beaufschlagung der erforderlichen Betriebsspannung erzeugt werden. Neben elektromagnetischer Strahlung wird hierbei auch jede weitere Strahlung verstanden, wie z. B. Akustische.

Der Sensor kann einerseits eine bildgebende Optik umfassen die eine Objekterkennung ermöglicht, wie z. B. ein CCD-Chip oder dergleichen, beispielsweise mit matrixförmiger Auflösung. Insbesondere bevorzugt kann ein solcher Sensor aber auch Entfernungen messen, insbesondere bevorzugt für jeden einzelnen Bildpunkt separat. Damit entstehen z.B. einzelne Bildpunkt-Empfangseinheiten. Das heißt für jedes erfasste Pixel kann neben der Bewertung, ob hierfür ein Objekt erkannt wird oder nicht, zusätzlich auch die Distanz zwischen dem Sensor und dem von ihm als Bildpunkt erkannten, tatsächlichen Gegenstands, wie z. B. einem Objekt oder anderenfalls beispielsweise dem Boden oder einer Wand, ermittelt werden. Geeignet hierfür sind beispielsweise so genannte 3-D Sensoren.

Eine Detektion von Objekten in dem vom Sensor zu überwachenden Oberwachungsbereich kann insbesondere dadurch erfolgen, dass die Sendeeinrichtung veranlasst wird, Strahlung auszusenden, z. B. von einer ihr zugeordneten Kontrolleinheit, beispielsweise in der Form eines Prozessors. Bei korrekter Funktionsweise der Sendeeinrichtung, z. B. eines elektromagnetische und/oder akustische Strahlung aussendenden Sendeelementes, emittiert diese eine entsprechende Strahlung, vorzugsweise direkt in die Richtung des zu überwachenden Raumbereichs. Entsprechend der Reflexionseigenschaften der von dieser emittierten Strahlung beaufschlagten Oberflächen, wie z. B. Boden, Wände und insbesondere Objekte, kann ein entsprechender Anteil der auftreffenden Strahlung davon reflektiert werden, insbesondere auch zurück in die Richtung der zum Sensor gehörenden Empfangseinrichtung, zur Erfassung von Strählung. Bei korrekt arbeitender Empfangseinrichtung kann diese Empfangseinrichtung die reflektierte Strahlung auswerten.

Im Idealfall, also in dem Fall, wenn alle beteiligten Sensorkomponenten korrekt arbeiten und insbesondere korrekt eingestellt und ausgerichtet sind, kann eine korrekte Szenenabbildung erfasst und ausgewertet werden, wie sie sich tatsächlich im zu überwachenden Raumbereich darstellt. Die so ermittelten Signale können dann von einer Auswerteanordnung auf Plausibilität hin überprüft werden. Möglich sind aber auch Fälle, in denen keine vollständige und/oder korrekte Szenenermittlung möglich ist. Ursächlich hierfür können beispielsweise eine falsche Sensorausrichtung und/oder nicht oder nicht korrekt arbeitende Sensorkomponenten und/oder den Strahlengang in nicht betriebsgemäß vorgesehener Weise beeinflussende Störungen sein.

Selbst bei als plausibel beurteilten Signalen der Empfangseinrichtung bezüglich der zu erfassenden Szenerie könnte, z. B. aufgrund von Störungen, eine Fehlfunktion einer Sensorkomponente vorliegen, die in dem Fall so nicht erfasst werden kann, bzw. nicht erfasst wurde.

Um solche, ggf. vorliegende Fehlfunktionen feststellen zu können, bzw. zu prüfen, dass alle für die korrekte Funktion des Überwachungssensors vorgesehenen Sensorkomponenten korrekt arbeiten, werden daher weitere, diesbezügliche Signal-Plausibilitätsprüfungen vorgeschlagen, und zwar insbesondere bevorzugt für wenigstens eine einzelne Sensorkomponente, besonders bevorzugt aber für alle Sensorkomponenten.

Zur Überprüfung, ob die von der Empfangseinrichtung, insbesondere aller ihrer einzelnen, jeweils einen Bildpunkt und/oder eine Distanz erfassenden Komponenten, ein korrektes Signal gemäß der beaufschlagten Strahlungsintensität liefert, wird vorgeschlagen, eine zweite Sendeeinrichtung vorzusehen, die dazu ausgelegt ist, ein Testsignal auszusenden. Vorzugsweise ist diese zweite Sendeeinrichtung so angeordnet, dass die von ihr abgegebene Sendestrahlung in direkter Strahlungsrichtung zur Empfangseinrichtung hin abgestrahlt wird. Durch die direkte Bestrahlung kann sichergestellt werden, dass die einzelnen, Bildpunkte erfassenden Sensorelemente der Empfangseinrichtung genau mit der Sendeleistung beaufschlagt werden, die ihrer geometrischen Anordnung zur Sendeeinrichtung und deren Ausgangsleistung in die betreffende Richtung entspricht.

Abhängig von der Wahl der Form und/oder der geometrischen Anordnung dieser zweiten Sendeeinrichtung gegenüber der Empfangseinrichtung können bereits mit einem einzelnen, besonders bevorzugt punktförmig ausgebildeten Sendeelement verschiedene Signal-Plausibilitätsprüfungen für die Empfangseinrichtung vorgenommen werden.

Beispielsweise ist es hiermit möglich in einem ersten Plausibilitätstest zu prüfen, ob die einzelnen, Bildpunkte erfassenden Sensorelemente bei Bestrahlung überhaupt ein Signal liefern. Im Weiteren kann geprüft werden, ob der Wert des dem jeweiligen Bildpunkt-Erfassungselementes zuzuordnenden Signals in dem zu erwartenden Wertebereich liegt, in dem er sich befinden müsste, wenn er unter den bekannten Voraussetzungen mit dem zur Plausibilitäts-Prüfung der Empfangstätigkeit auszusendenden Prüfstrahlung beaufschlagt wird.

Zur möglichst zuverlässigen Ausgrenzung von Störungen können hierfür sowohl die Empfangseinrichtung als auch die das Testsignal aussendende zweite Sendeeinrichtung in einem geschützten Bereich im Sensor angeordnet sein, z. B. innerhalb eines Gehäuses.

Als dritte Plausibilitätsprüfung für ein Signal eines Bildpunkt-Erfassungselementes der Empfangseinrichtung kann dieses Signal derart mit einem für eine Empfangstätigkeit vorbestimmten Wert bzw. einem entsprechenden Wertebereich verglichen werden, dass überprüft wird, ob es in ein von allen zu prüfenden Bildpunkt-Empfangseinheiten zu lieferndes Signalmuster passt. Ein solches Signalmuster kann beispielsweise der Verlauf der Strahlungsintensität sein, die eine punktförmige Strahlungsquelle entlang ihres radialen Abstandes von der Quelle aus beginnend erfährt. Bei einer Anordnung der Strahlungsquelle seitlich der einzelnen Bildpunkt-Empfangselemente der Empfangseinrichtung kann dabei ein im wesentlichen flächiger Strahlungsverlauf angenommen und das hierdurch von der Empfangseinrichtung zu erwartende, den einzelnen Bildpunkt-Empfangseinheiten zuzuordnende Muster auf Plausibilität hin überprüft werden.

Zur Überprüfung der auf Plausibilität zu überprüfenden, einzelnen Signale des Sensors, bzw. der einzelnen Signale seiner einzelnen Komponenten, sofern für diese mehrere Signale auf Plausibilität hin zu überprüfen sind, können entsprechende Prüf-Bauteile vorgesehen sein. So können einzelne Betriebsparameter, wie z. B. die Betriebsspannung, der Betriebsstrom und/oder die Sendestrahlung, z. B. deren Intensität, mit einem entsprechend geeignetem Prüf-Bauteil in der Form beispielsweise eines Spannungserfassungsbauteils, eines Stromerfassungsbauteils und/oder eines Strahlungserfassungsbauteils auf Plausibilität hin überprüft werden.

Mit der Spannungserfassung kann dabei sowohl eine Eingangsspannung als auch eine Ausgangsspannung erfasst und auf Plausibilität hin geprüft werden. Mit einer Strommessung kann festgestellt werden, ob der für den betreffenden Betriebsfall zu erwartende Betriebsstrom über den betreffenden Schaltungsknoten fließt. Mittels dem zur Erfassung der betreffenden Strahlung vorgesehenen Sensors kann, wie zu den einzelnen Bildpunkt-Empfangseinheiten der Empfangseinrichtung bereits beschrieben, sowohl die grundsätzliche Funktion einer Strahlungsabgabe, z. B. der Sendeeinrichtung, im Sinne von funktioniert bzw. funktioniert nicht, bei Aktivschaltung geprüft werden. Im Weiteren kann beispielsweise aber auch die Intensität der Strahlung, zu deren Beurteilung vorzugsweise lediglich ein Teil erfasst wird, dahingehend auf Plausibilität geprüft werden, ob deren Wert in einem für den betreffenden Betriebsfall zu erwartenden Wertebereich liegt.

Für eine Sendeeinrichtung, die ggf. mehr als ein Sendeelement aufweist, beispielsweise ein Sendedioden-Array, können bevorzugt mehrere Empfänger zur Überprüfung der von den einzelnen Sendeelementen mittels ihrer Strahlung ausgestrahlten Signalen vorgesehen sein. Insbesondere bevorzugt ist es hierbei, wenn für jedes Sendeelement ein separates Prüf-Bauteil in der Form eines entsprechenden Empfängers vorgesehen ist. Besonders vorteilhaft, da störende, von anderen Sendeelementen stammende Strahlung ausblendend, können hierbei Abschirmungen vorgesehen sein, die nur Strahlung von dem Sendeelement durchlassen, welches von dem betreffenden Empfänger geprüft werden soll. Die von ihm aufgrund der einfallenden Strahlungsintensität als Signal zu interpretierende Spannung, oder der Strom, liefert den entsprechenden Wert, der auf Plausibilität hin überprüft werden kann.

Da grundsätzlich nicht nur die zu prüfenden Sensorelemente wie Empfangseinrichtung und Sendeeinrichtung, bzw. deren einzelne Komponenten, sofern mehrere vorhanden, von Fehlfunktionen betroffen sein können, kann die Auswerteanordnung so aufgebaut sein, dass auch eine Plausibilitätsprüfung für das betreffende Prüf-Bauteil vorgesehen sein kann. Für die zweite Sendeeinrichtung kann dies beispielsweise durch das Vorsehen eines weiteren Empfängers realisiert sein, der vorzugsweise sowohl die grundsätzliche Funktionalität wie "ein" bzw. "aus" erfassen kann, als auch für eine Intensitätswertbestimmung für ggf. vorgesehene Änderungen in der Sendeintensität der zweiten Sendeeinrichtung geeignet sein kann. Hierdurch kann verifiziert werden, ob ein nicht detektierendes Signal für ein aufgrund eines Sendevorgangs zu erwartendes Empfangssignal der Sendeeinrichtung, bzw. deren viele, bezogen auf die einzelnen Eildpunkt-Sendeempfangseinheiten, nicht zwangsweise einen Defekt der Sendeeinrichtung anzeigen muss, sondern ggf. einen Defekt der zweiten Sendeeinrichtung. Dies ist beispielsweise möglich, wenn trotz erfasstem Stromfluss für die Sendeeinrichtung keine ausreichend intensive Abstrahlung erfasst werden kann.

Für die den einzelnen Sendeelementen der Sendeeinrichtung zugeordneten Prüf-Empfänger kann ebenfalls eine Plausibilitätsprüfung vorgesehen sein. Z. B. dahingehend, dass bei ggf. negativem Prüfergebnis, für das von ihm zu prüfende Sendeelement eine Einzelaktivierung dieses betreffenden Sendeelementes oder von Gruppen von Sendeelementen erfolgt und mittels der Empfangseinrichtung die Plausibilität des Ausfalls des betreffenden Sendeelementes verifiziert wird. Sofern die Empfangseinrichtung ein Signal detektiert, kann dies als Hinweis interpretiert werden, dass das betreffende Prüf-Bauteil ein nicht plausibles Signal liefert. Solche im Grunde redundanten Plausibilitätsprüfungen können grundsätzlich für alle einzelnen Sensorelementekomponenten und/oder Prüf-Bauteile vorgesehen werden.

Es könnten lediglich einzelne Sendeelemente ausgefallen sein, sodass das Prüfbauteil den geringen Intensitätsausfall möglicherweise unzuverlässig detektiert. Die einzelnen Sendeelemente können durch Kurzschluss oder durch Unterbrechung ausfallen. Das Prüfbauteil kann daher vorgesehen sein den Strom oder die Spannung von einzelnen oder von Gruppen von allen Sendeelementen zu prüfen und aus einer Änderung auf einen Ausfall zu schließen.

Es kann in einer weiter bevorzugten Ausführungsform eine dritte Sendeeinrichtung vorgesehen sein, die dazu ausgelegt ist, ebenfalls ein Testsignal auszusenden. Diese dritte Sendeeinrichtung kann vorzugsweise hinter einer den Sensor gehäuseartig abdeckenden Abdeckung angeordnet sein. Hiermit kann beispielsweise eine Überprüfung durchgeführt werden, ob der Sender ggf. zum Teil oder sogar insgesamt so abgedeckt ist, dass eine von der Sendeeinrichtung abgegebene Strahlung nicht wieder so zurückreflektiert werden kann, dass sie von der Empfangseinrichtung in einer bei Empfangstätigkeit zu erwartenden Weise empfangen werden kann.

Die dritte Sendeeinrichtung kann entweder so innerhalb der Sensor-Gehäuseabdeckung angeordnet sein, dass wenigstens ein Teil der von ihr abgegebenen Strahlung in Richtung Empfangseinrichtung reflektiert wird. Damit könnte beispielsweise eine erste Plausibilitätsprüfung für das hierdurch der dritten Sendeeinrichtung zuzuordnenden Signal realisiert werden.

Für eine Alternative und/oder zusätzliche Plausibilitätsprüfung für Signale der dritten Sendeeinrichtung kann auch ein drittes, einen Betriebsparameter wie die Betriebsspannung, dem Betriebsstrom und/oder die Sendestrahlung der dritten Sendeeinrichtung verifizierendes Prüf-Bauteil vorgesehen sein. Damit kann trotz einer ggf. negativen Plausibilitätsbescheidung bezüglich einem bei Sendebetrieb von der Empfangseinheit geprüften Signal für ein von der dritten Sendeeinrichtung zu erwartendes und bei korrekter Funktionsweise des dritten Prüf-Bauteils feststellbares Betriebssignal eine positive Plausibilitätsbescheidung erfolgen.

Dieses dritte Prüf-Bauteil könnte, z. B. zur Reduzierung der Gesamtanzahl von Sensorkomponenten, ggf. auch zur Plausibilitätsprüfung eines anderen Sendeelementes, z. B. des ersten und/oder des zweiten herangezogen werden.

In einer bevorzugten Ausführungsform kann der Sensor, der oben beispielhaft als 3-D-Sensor beschrieben ist, im Infrarotwellenlängenbereich arbeiten, insbesondere bevorzugt mit moduliertem Infrarotlicht. Dies hat den Vorteil, dass der Sensor beispielsweise mit infrarotdurchlässigem Kunststoff abgedeckt und so gegen äußere Einflüsse geschützt werden kann, sodass auch in gegebenenfalls stärker von Umwelteinflüssen betroffenen Montagebereichen ein langzeitstabiler Betrieb eines solchen Sensors möglich ist. Ein Pulsbetrieb ermöglicht die Reduzierung der Gesamtleistung und insbesondere der im überwiegenden Maße als Abwärme auftretenden Verlustleistung, beispielsweise im Vergleich zu einem dauerhaft betriebenen Sensor.

Die Basis der Distanzermittlung der einzelnen Bilderfassungspunkte kann beispielsweise eine so genannte "Time-of-flight" Methode sein, bei dem die Laufzeit eines modulierten Signals zur Distanzermittlung herangezogen wird. Die Laufzeit kann durch eine Phasendifferenzmessung erfolgen.

### Ausführungsformen:

Nachfolgend werden unter Bezug auf die beigefügten Figuren beispielhafte Ausführungsformen beschrieben.
Dem gemäß zeigen die:

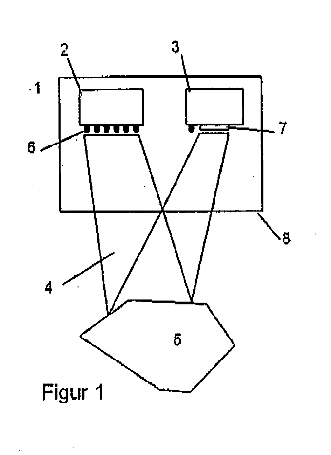

Figuren 1-5 rein beispielhaft und schematisch unterschiedliche Ausführungsformen eines erfindungsgemäßen Sensors.

Demgemäß zeigt die Figur 1 einen Sensor 1 für die Überwachung eines Überwachungsbereichs, insbesondere eines im öffnungsbereich einer Tür liegenden Raumbereichs. Um ein ggf. in dem zu überwachenden Raumbereich anwesendes Objekt 5 detektieren zu können, ist der Sensor mit einer Sendeeinrichtung 2 ausgestattet. Diese umfasst im dargestellten Ausführungsbeispiel beispielhaft sechs einzelne Sendeelemente 6, z. B. in der Form von Sende-LEDs. Diese können beispielsweise im Infrarotbereich arbeiten. Der von ihnen ausgestrahlte Strahlenkegel 4 wird an der Oberfläche eins hier beispielhaft dargestellten Objektes 5 zurück zum Sensor 1 und zu einer diesem zugehörigen Empfangseinheit 3 reflektiert.

Die Empfangseinheit 3 umfasst einen Strahlensensor 7, der beispielsweise matrixförmig angeordnete, einzelne Strahlenempfangselemente aufweist, sodass hierdurch eine bildgebende Szenenerfassung für den zu überwachenden Überwachungsbereich möglich ist. Insbesondere vorteilhaft kann dieser Strahlensensor 7 so ausgebildet sein, dass er für jedes einzelne Pixel auch den Abstand zwischen ihm und der Oberfläche ermitteln kann, an welcher die von der Sendeeinrichtung 2 abgegebene Strahlung reflektiert wurde.

Damit kann in der Weise einer 3-D-Erkennung neben dem Vorhandensein eines ggf. im zu überwachenden Raumbereich befindlichen Objektes auch dessen Abstand zum Türsensor ermittelt werden.

Zum Schutz der einzelnen Sensorkomponenten kann der Sensor 1 ein Gehäuse 8 umfassen, welches insbesondere vorteilhaft für die vom Sender ausgesandte Strahlung durchlässig ist.

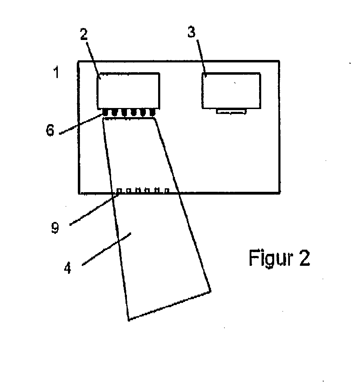

In der Figur 2 sind Prüf-Bauteile 9 dargestellt, mittels denen die Plausibilität der von der Sendeeinrichtung 2 abgegebenen Signale in der Form der von ihr ausgesandten Strahlung geprüft werden kann. Der Einfachheit halber ist der Strahlengang flächig gezeigt, wobei vorzugsweise jedem einzelnen Sendeelement 6 direkt ein Prüf-Bauteil zugeordnet ist. Im dargestellten Ausführungsbeispiel kann dieses Prüf-Bauteil 9 als ein zur Erfassung einer elektromagnetischen Strahlung geeignetes Bauelement sein, z. B. in der Form einer Photodiode.

Um eine zuverlässige Zuordnung zwischen den einzelnen Strahlensensoren 6 und den ihnen zur Plausibilitätsprüfung ihrer Signale zugeordneten Prüf-Bauteilen 9 ermöglichen zu können, kann jedem Prüf-Bauteil eine entsprechende Abdeckung zugeordnet sein, die Strahlung von anderen Sendeelementen abhält, beispielsweise durch Abschirmung.

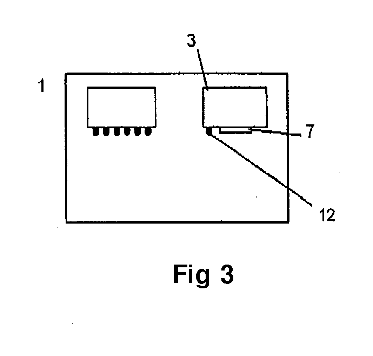

In der Figur 3 ist eine zweite Sendeeinheit 12 dargestellt, die z. B. in der Form einer Test-LED ausgebildet sein kann. Mittels dieser kann ein Testsignal erzeugt werden, so dass die dem Strahlensensor 7 im gesamten und insbesondere jeweils seinen einzelnen Bildpunkten erfassenden Einzelelementen zugeordneten Signale auf Plausibilität hin überprüft werden können. Durch die seitliche Anordnung der zweiten Sendeeinheit 12 in Bezug auf den Strahlensensor 7 kann ein charakteristisches Muster über die einzelnen Bildpunkt-Erfassungselemente erzeugt und auf Plausibilität hin überprüft werden.

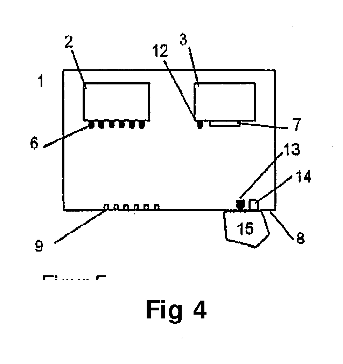

Um auch eine Plausibilitätsprüfung für ein dem zweiten Sendeelement 12 zugeordnetes Signal zu ermöglichen, z. B. für den Fall, dass vom Strahlensensor 7 keine Signale erfassbar sind, kann auch eine zweite Empfangseinheit vorgesehen sein. Mittels dieser kann das dem zweiten Sensor zugeordnete Signal auf Plausibilität hin überprüft werden. Diese zweite Empfangseinheit (hier nicht dargestellt) könnte beispielsweise neben der zweiten Sendeeinheit 12 angeordnet sein. Zur Reduzierung der Gesamtanzahl an Sensorkomponenten könnte die Funktion einer solchen zweiten Empfangseinheit aber auch durch eine andere Empfangseinheit übernommen werden, z. B. durch die Position Nr. 14 in der Figur 4.

In der Figur 4 sind eine dritte Sendeeinheit 13 und eine dritte Empfangseinheit 14 vorgesehen, um zu überprüfen, ob auf dem Gehäuse 8 des Sensors 1 ggf. ein den Strahlengang einer Sensorkomponente störender Gegenstand 15 haftet und/oder sich zwischen ihm und dem zu überwachenden Überwachungsbereich befindet. Beispielsweise kann mit einer vergleichsweise geringen Strahlung durch die dritte Sendeeinheit 13 anhand des der dritten Empfangseinheit 14 zugeordneten Signals eine Plausibilitätsprüfung durchgeführt werden, ob ein solcher Störungsfall vorliegt oder nicht.

In einem weiteren Anwendungsfall können diese dritte Sendeeinrichtung 13 und diese dritte Empfangseinrichtung 14 als ein Eingang bzw. als ein Ausgang des Sensors 1 genutzt werden. Z. B. für eine Kommunikation mit einer externen Einheit, z. B. für Wartungsarbeiten, Updates, Steuerung oder Datenauslese am bzw. vom Sensor. Eine Derartige Schnittstelle ist als Optilink bekannt.

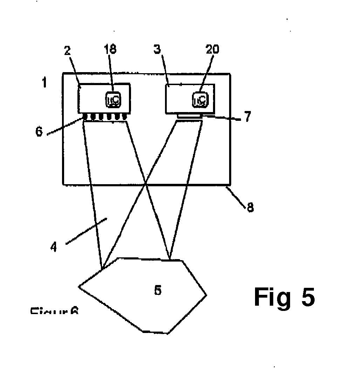

In der Figur 5 ist eine Ausführungsform dargestellt, die zwei Kontrolleinheiten 18, 20 umfasst. Die Kontrolleinheit 18 ist hierbei beispielhaft für die Sendeeinrichtung 2 vorgesehen und die Kontrolleinheit 20 für die Empfangseinheit 3. Zusätzlich kann auch eine gegenseitige Überwachung der beiden Prozessoren 18, 20 realisiert werden.

### Bezugszeichenliste:

- 1: Sensor
- 2: Sendeeinrichtung
- 3: Empfänger
- 4: IR-Licht
- 5: Objekt
- 6: Sende-LED
- 7: Strahlungssensor TOF-Chip
- 8: Gehäuse
- 9: Prüf-Bauteil Test-Photodiode Sender
- 10: Sendelinse
- 11: Spiegel
- 12: Test-LED für Empfänger
- 13: Sender/Ausgang
- 14: Empfänger/Eingang
- 15: störender Gegenstand
- 18: Prozessor Sender
- 20: Prozessor Empfänger

## Patentansprüche

1. Sensor (1) für die Überwachung eines Überwachungsbereichs, insbesondere eines im öffnungsbereich einer Tür liegenden Raumbereichs, mit einer Sendeeinrichtung (2), die eine Strahlung (4), insbesondere elektromagnetische Strahlung aussendet, und einer Empfangseinrichtung (3, 7) zur Erfassung von Strahlung, insbesondere reflektierter, von der Sendeeinrichtung ausgestrahlter Strahlung, wobei der Sensor in der Lage ist, mittels einer bildgebenden Optik und der erfassten Strahlung Objekte (5) im Überwachungsbereich zu detektieren, und wobei Prüfmittel zur Durchführung einer Funktionsprüfung für wenigstens eine Sensorkomponente vorgesehen sind, **dadurch gekennzeichnet, dass** die Prüfmittel eine Auswerteanordnung umfassen, die dazu ausgelegt ist, ein Signal der Sendeeinrichtung auf Plausibilität hin zu überprüfen, wobei ein Prüf-Bauteil (9) zur Erfassung der Intensität der von einem Sendeelement (6) der Sendeeinrichtung (2) abgegebenen Strahlung (4) vorgesehen ist.

2. Sensor nach Anspruch 1, **dadurch gekennzeichnet, dass** eine zweite Sendeeinrichtung (12) vorgesehen ist, die eine punktförmige Signalquelle ausbildet und insbesondere seitlich der Empfangseinheit angeordnet ist.

3. Sensor nach einem der vorangehenden Ansprüche, **dadurch gekennzeichnet, dass** die Prüfmittel ein erstes, einen Betriebsparameter, wie die Betriebsspannung, den Betriebsstrom und/oder die Sendestrahlung, z. B. die Sendeintensität, eines Senderelementes verifizierendes Prüf-Bauteil umfassen.

4. Sensor nach einem der vorangehenden Ansprüche, **dadurch gekennzeichnet, dass** die Prüfmittel ein, einen Betriebsparameter, wie die Betriebsspannung, den Betriebsstrom und/oder die Sendestrahlung, eines Senderelementes verifizierendes zweites Prüf-Bauteil (9) umfassen.

5. Sensor nach einem der vorangehenden Ansprüche, **dadurch gekennzeichnet, dass** die Prüfmittel eine dritte Sendeeinrichtung (13) umfassen, die dazu ausgelegt ist, ein Testsignal auszusenden.

6. Sensor nach einem der vorangehenden Ansprüche, **dadurch gekennzeichnet, dass** die Prüfmittel ein, einen Betriebsparameter, wie die Betriebsspannung, den Betriebsstrom und/oder die Sendestrahlung, eines Senderelementes verifizierendes drittes Prüf-Bauteil (14) umfassen.

7. Sensor nach einem der vorangehenden Ansprüche, **dadurch gekennzeichnet, dass** die Prüfmittel eine Kontrolleinheit (18, 20) umfassen.

8. Sensor nach einem der vorangehenden Ansprüche, **dadurch gekennzeichnet, dass** die dritte Sendeeinrichtung (13) und das dritte Prüfbauteil (14) Teil einer Schnittstelle zur Kommunikation mit dem Sensor von aussen ist.

9. Sensor nach einem der vorangehenden Ansprüche, **dadurch gekennzeichnet, dass** die Sendeleistung in Abhängigkeit von der Messung des dritten Prüfbauteils (14) gesteuert ist.

## Claims

1. Sensor (1) for monitoring a monitoring region, in particular a spatial region located in the opening region of a door, with a transmission device (2), which transmits a radiation (4), in particular electromagnetic radiation, and a receiving device (3, 7) for detecting radiation, in particular reflected radiation radiated by the transmission device, wherein the sensor is in a position to detect objects (5) in the monitoring region by means of an imaging optical system and the detected radiation, and wherein testing means are provided to carry out a functional test for at least one sensor component, **characterised in that** the testing means comprise an evaluation arrangement, which is configured to check a signal of the transmission device for plausibility, a testing component (9) being provided to detect the intensity of the radiation (4) emitted by a transmission element (6) of the transmission device (2).

2. Sensor according to claim 1, **characterised in that** a second transmission device (12) is provided, which forms a point-like signal source and, in particular, is arranged to the side of the receiving unit.

3. Sensor according to any one of the preceding claims, **characterised in that** the testing means comprise a first testing component verifying an operating parameter, such as the operating voltage, the operating current and/or the transmission radiation, for example the transmission intensity, of a transmitter element.

4. Sensor according to any one of the preceding claims, **characterised in that** the testing means comprise a second testing component (9) verifying an operating parameter, such as the operating voltage, the operating current and/or the transmission radiation, of a transmitter element.

5. Sensor according to any one of the preceding claims, **characterised in that** the testing means comprise a third transmission device (13), which is configured to transmit a test signal.

6. Sensor according to any one of the preceding claims, **characterised in that** the testing means comprise a third testing component (14) verifying an operating parameter, such as the operating voltage, the operating current and/or the transmission radiation, of a transmitter element.

7. Sensor according to any one of the preceding claims, **characterised in that** the testing means comprise a control unit (18, 20).

8. Sensor according to any one of the preceding claims, **characterised in that** the third transmission device (13) and the third testing component (14) are part of an interface for communication with the sensor from outside.

9. Sensor according to any one of the preceding claims, **characterised in that** the transmission power is controlled depending on the measurement of the third testing component (14).

## Revendications

1. Capteur (1) pour la surveillance d'une zone à surveiller, en particulier d'un espace situé dans la zone d'ouverture d'une porte, pourvu d'un dispositif émetteur (2) émettant un rayonnement (4), en particulier un rayonnement électromagnétique, et d'un dispositif de réception (3, 7) pour détecter un rayonnement, en particulier un rayonnement réfléchi émis par le dispositif émetteur, le capteur étant en mesure de détecter des objets (5) dans la zone à surveiller au moyen d'une optique d'imagerie et du rayonnement détecté, et des moyens de contrôle étant prévus pour mettre en oeuvre un contrôle du fonctionnement d'au moins un composant du capteur, **caractérisé en ce que** les moyens de contrôle comprennent un système d'évaluation qui est conçu pour contrôler la plausibilité d'un signal du dispositif de réception, un composant de contrôle (9) étant prévu pour détecter l'intensité du rayonnement (4) transmis par un élément émetteur (6) du dispositif émetteur (2).

2. Capteur selon la revendication 1, **caractérisé en ce qu'**un second dispositif émetteur (12) est prévu, lequel constitue une source de signaux sous forme de point et est disposé notamment à côté de l'unité de réception.

3. Capteur selon l'une des revendications précédentes, **caractérisé en ce que** les moyens de contrôle comprennent un premier composant de contrôle vérifiant un paramètre de fonctionnement d'un élément d'émetteur, tel que la tension de fonctionnement, le courant de service et/ou le rayonnement d'émission, par exemple l'intensité d'émission.

4. Capteur selon l'une des revendications précédentes, **caractérisé en ce que** les moyens de contrôle comprennent un deuxième composant de contrôle (9) vérifiant un paramètre de fonctionnement d'un élément d'émetteur, tel que la tension de fonctionnement, le courant de service et/ou le rayonnement d'émission.

5. Capteur selon l'une des revendications précédentes, **caractérisé en ce que** les moyens de contrôle comprennent un troisième dispositif émetteur (13) qui est conçu pour émettre un signal d'essai.

6. Capteur selon l'une des revendications précédentes, **caractérisé en ce que** les moyens de contrôle comprennent un troisième composant de contrôle (14) vérifiant un paramètre de fonctionnement d'un élément d'émetteur, tel que la tension de fonctionnement, le courant de service et/ou le rayonnement d'émission.

7. Capteur selon l'une des revendications précédentes, **caractérisé en ce que** les moyens de contrôle comprennent une unité de contrôle (18, 20).

8. Capteur selon l'une des revendications précédentes, **caractérisé en ce que** le troisième dispositif émetteur (13) et le troisième composant de contrôle (14) font partie d'une interface permettant de communiquer avec le capteur depuis l'extérieur.

9. Capteur selon l'une des revendications précédentes, **caractérisé en ce que** la puissance d'émission est commandée en fonction de la mesure du troisième composant de contrôle (14).
